(19) **Europäisches Patentamt**
**European Patent Office**
**Office européen des brevets**

(11) **EP 4 576 560 A1**

(12) **EUROPEAN PATENT APPLICATION**
published in accordance with Art. 153(4) EPC

(43) Date of publication:
**25.06.2025 Bulletin 2025/26**

(21) Application number: **22955748.3**

(22) Date of filing: **19.08.2022**

(51) International Patent Classification (IPC):
**H02P 21/22** (2016.01)   **H02P 27/06** (2006.01)

(52) Cooperative Patent Classification (CPC):
**H02P 21/22; H02P 27/06**

(86) International application number:
**PCT/JP2022/031327**

(87) International publication number:
**WO 2024/038574 (22.02.2024 Gazette 2024/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **MIYAZAKI Yasuyuki**
  **Tokyo 100-8310 (JP)**
• **HACHIYA Yosuke**
  **Tokyo 100-8310 (JP)**
• **MORI Mizuki**
  **Tokyo 100-8310 (JP)**

(74) Representative: **Studio Torta S.p.A.**
**Via Viotti, 9**
**10121 Torino (IT)**

(54) **AC ELECTRIC MOTOR CONTROL DEVICE AND AIR CONDITIONING DEVICE**

(57) In a compressor control device (310) as an AC motor control device, a torque compensator (314) calculates a torque compensation value that is a compensation value for a basic torque that is required for suppressing a fluctuation of a rotational velocity of an AC motor (111), and outputs a torque compensation command indicating the calculated torque compensation value. A compensation limiter (315) executes limitation processing for limiting the torque compensation value, and outputs a limit-processed torque compensation command indicating a limit-processed torque compensation value obtained by the execution of the limitation processing on the torque compensation value. In the limitation processing, the compensation limiter (315) limits an amplitude of the torque compensation value to be lower than or equal to a predetermined upper limit value. A first upper limit value that is an upper limit value for a value of the target rotational velocity within a first rotational velocity range is defined to be smaller than a second upper limit value that is the upper limit value for a value of the target rotational velocity within a second rotational velocity range indicating the rotational velocity lower than the first rotational velocity range.

FIG. 6

EP 4 576 560 A1

**Description**

Technical Field

The present disclosure relates to an alternating-current (AC) motor control device and an air conditioning device.

Background Art

As disclosed in Patent Literature 1, an AC motor control device is known that has a function for suppressing a fluctuation of a rotational velocity of an AC motor control device. A periodically-varying load torque acts on the AC motor. The AC motor control device includes a compensator that outputs, to an inverter for driving the AC motor, a compensation signal for suppressing a fluctuation of the rotational velocity, and a limiter that limits a compensation amount indicated by the compensation signal in order to reduce an amount of power consumption of the AC motor.

Citation List

Patent Literature

Patent Literature 1: Unexamined Japanese Patent Application Publication No. 2006-180605

Summary of Invention

Technical Problem

Patent Literature 1 is silent on a relationship between a degree of limitation to the aforementioned compensation amount and the rotational velocity of the AC motor. In the case where the rotational velocity of the AC motor is high, the AC motor may possibly operate unstably even with limitation of the compensation amount by the limiter.
An objective of the present disclosure is to provide an AC motor control device that can suppress a fluctuation of a rotational velocity of an AC motor and that can suppress occurrence of unstable operation of the AC motor when the rotational velocity is high, and to provide an air conditioning device that includes this AC motor control device.

Solution to Problem

An AC motor control device according to the present disclosure includes:

an estimator to calculate an estimated rotational velocity that is an estimate of a rotational velocity of an AC motor and an estimated rotational acceleration that is an estimate of a rotational acceleration of the AC motor;
a rotational velocity controller to calculate, using the estimated rotational velocity, a basic torque to be output by the AC motor that is required for causing the rotational velocity of the AC motor to approach the target rotational velocity indicated by a velocity command, and output a basic torque command indicating the calculated basic torque;
a torque compensator to calculate, using the estimated rotational acceleration, a torque compensation value that is a compensation value for the basic torque that is required for suppressing a fluctuation of the rotational velocity of the AC motor, and output a torque compensation command indicating the calculated torque compensation value;
a compensation limiter to execute limitation processing for limiting the torque compensation value indicated by the torque compensation command, and output a limit-processed torque compensation command indicating a limit-processed torque compensation value obtained by the execution of the limitation processing on the torque compensation command;
an adder to add, to the basic torque indicated by the basic torque command, the limit-processed torque compensation value indicated by the limit-processed torque compensation command, and output a synthetic torque command indicating a synthetic torque obtained by the addition; and
a voltage instructor to output, to an inverter to supply electric power to the AC motor, a voltage command indicating a voltage required for outputting the synthetic torque indicated by the synthetic torque command, in which
in the limitation processing, the compensation limiter limits an amplitude of the torque compensation value that changes over time to be lower than or equal to a predetermined upper limit value,
the upper limit value depends on a value of the target rotational velocity, and
a first upper limit value that is the upper limit value for a value of the target rotational velocity within a first rotational velocity range is defined to be smaller than a second upper limit value that is the upper limit value for a value of the target rotational velocity within a second rotational velocity range indicating the rotational velocity lower than the first rotational velocity range.

Advantageous Effects of Invention

The aforementioned configuration enables suppressing a fluctuation of the rotational velocity of the AC motor and suppressing occurrence of unstable operation of the AC motor when the rotational velocity is high.

Brief Description of Drawings

FIG. 1 is a schematic diagram illustrating configuration of a railroad vehicle air conditioning apparatus according to Embodiment 1;
FIG. 2 is a schematic diagram illustrating configuration of a compressor according to Embodiment 1;
FIG. 3 is a graph illustrating a load torque acting on an AC motor of the compressor according to Embodiment 1;
FIG. 4 is a graph illustrating a vibration level of the compressor according to Embodiment 1;
FIG. 5 is a graph illustrating an output voltage of a compressor inverter according to Embodiment 1;
FIG. 6 is a schematic diagram illustrating configuration of a compressor control device according to Embodiment 1;
FIG. 7 is a graph illustrating an output voltage of a compressor inverter when limitation processing according to Embodiment 1 is executed;
FIG. 8 is a graph illustrating a relationship between upper limit values of an amplitude and a target rotational velocity according to Embodiment 1; and
FIG. 9 is a graph illustrating a relationship between upper limit values of an amplitude and a target rotational velocity according to Embodiment 2.

Description of Embodiments

Hereinafter, railroad vehicle air conditioning apparatuses according to embodiments are described with reference to the drawings. In the drawings, the same reference signs denote the same or corresponding components.

Embodiment 1

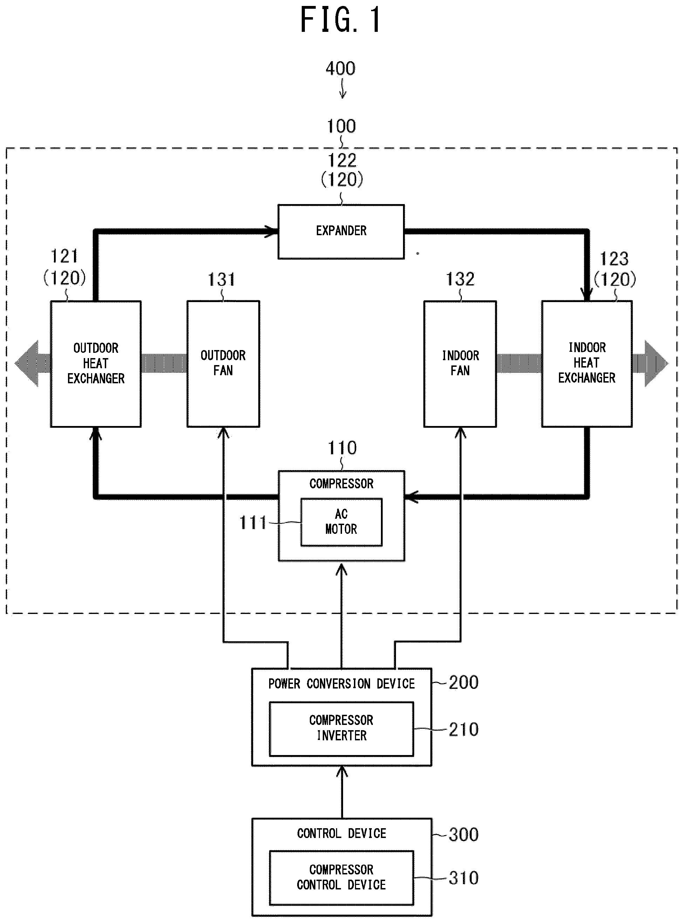

As illustrated in FIG. 1, a railroad vehicle air conditioning apparatus 400 according to the present embodiment includes an air conditioner 100 that performs air-conditioning of a passenger compartment of a railroad vehicle using a refrigeration cycle, a power conversion device 200 that supplies to the air conditioner 100 electric power necessary for the air-conditioning, and a control device 300 that controls the power conversion device 200. The air conditioner 100, the power conversion device 200, and the control device 300 are mounted on the railroad vehicle. The railroad vehicle air conditioning apparatus 400 is an example of an air conditioning device according to the present disclosure.

The air conditioner 100 includes a compressor 110 that compresses refrigerant and a cooperating devices group 120 that is included in, together with the compressor 110, a refrigeration cycle for circulation therethrough of the refrigerant.

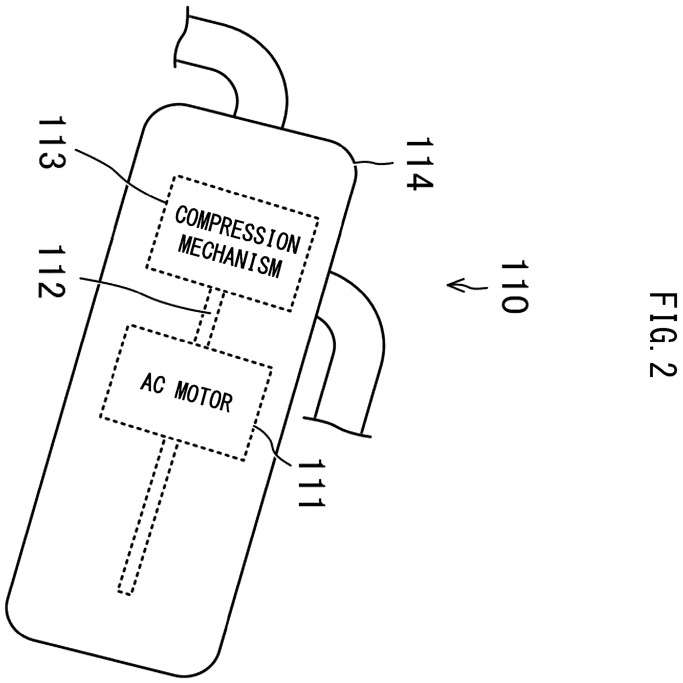

As illustrated in FIG. 2, the compressor 110 includes a drive shaft 112, an AC motor 111 that rotates the drive shaft 112, a compression mechanism 113 that compresses the refrigerant using rotation of the drive shaft 112, and a housing 114 that houses the drive shaft 112, the AC motor 111 and the compression mechanism 113.

The AC motor 111 is specifically a three-phase AC permanent magnet synchronous motor. Lubricating oil is accumulated at portions in the housing 114 that may come in contact with the refrigerant. The compressor 110 is arranged in the railroad vehicle sideways, that is, arranged such that the drive shaft 112 inclines with respect to a vertical direction.

Again with reference to FIG. 1, the cooperating devices group 120 includes an outdoor heat exchanger 121 that functions as a condenser to condense the refrigerant compressed by the compressor 110, an expander 122 to expand the condensed refrigerant, and an indoor heat exchanger 123 that functions as an evaporator to evaporate the expanded refrigerant. The gaseous refrigerant resulting from the evaporation by the indoor heat exchanger 123 is compressed again by the compressor 110.

The air conditioner 100 includes an outdoor fan 131 that facilitates heat exchange between the outdoor heat exchanger 121 and air of the outside of the vehicle, and an indoor fan 132 that facilitates heat exchange between the indoor heat exchanger 123 and air of the passenger compartment.

The power conversion device 200 converts electric power supplied to the railroad vehicle from an overhead wire and distributes the converted electric power to the AC motor 111 of the compressor 110, the outdoor fan 131, and the indoor fan 132. The control device 300 controls the power conversion device 200 to thereby adjust air-conditioning performance of the air conditioner 100.

The power conversion device 200 includes a compressor inverter 210 that supplies electric power to the AC motor 111 of the compressor 110. The compressor inverter 210 is an example of an inverter of the present disclosure. The control device 300 includes a compressor control device 310 that performs pulse width modulation (PWM) control of the compressor inverter 210. The compressor control device 310 is an example of an AC motor control device according to the present disclosure.

Hereinafter, the problem to be solved by the present embodiment is described.

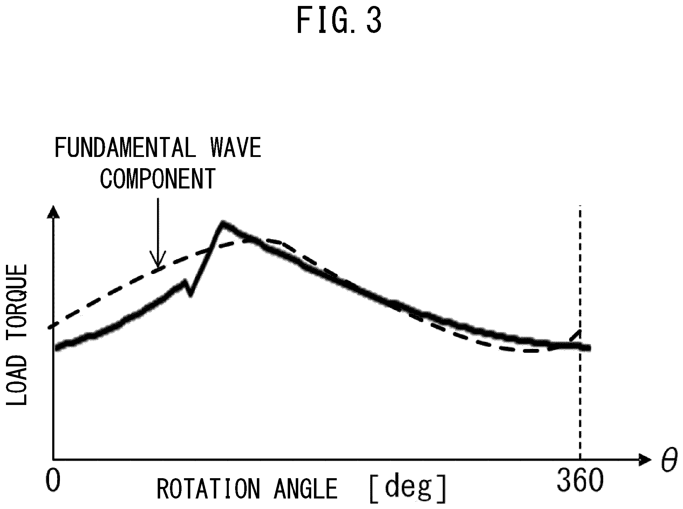

FIG. 3 illustrates a load torque acting on the AC motor 111 of the compressor 110. The vertical axis indicates the load torque, and the horizontal axis indicates a rotation angle of a rotor of the AC motor 111. As illustrated with the solid line in FIG. 3, the load torque acting on the AC motor 111 has one peak during one rotation of the rotor.

The presence of this peak causes fluctuations of a rotational velocity and a rotational acceleration of the rotor of the AC motor 111 that are hereinafter referred to as the "rotational velocity of the AC motor 111" and the "rotational acceleration of the AC motor 111, respectively. The frequency of the principal component of the fluctuations is equal to the number of rotations per one second of the rotor. The fluctuations of the rotational velocity and the rotational acceleration of the AC motor 111 cause vibration of the compressor 110.

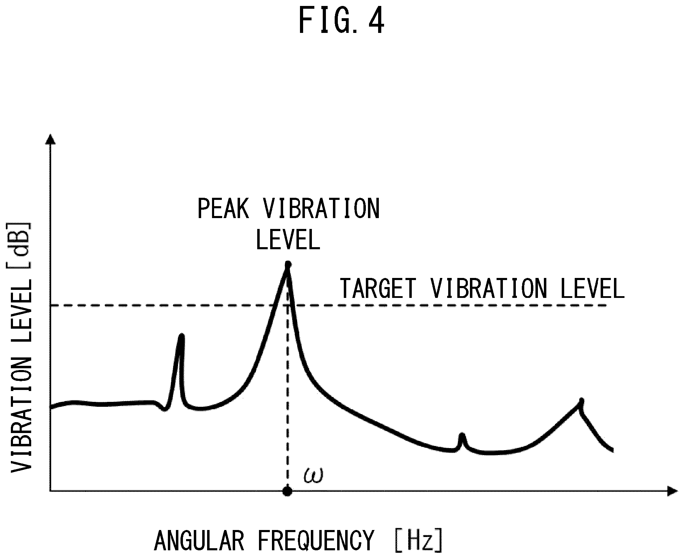

FIG. 4 is a schematic diagram illustrating a vibration level of the compressor 110. The vertical axis indicates the vibration level, and the horizontal axis indicates an angular frequency. As illustrated in FIG. 4, the vibration of the compressor 110 has an angular frequency component leading to a peak vibration level, which is hereinafter referred to as the "fundamental wave component". In FIG. 4, the angular frequency of the fundamental wave component is denoted as $\omega$. In FIG. 3 referenced above, the broken line indicates the fundamental wave component.

The vibration of the compressor 110 caused by the fluctuations of the AC motor 111 causes generation of noise and malfunction of the compressor 110. For this reason, keeping the above peak vibration level below the target vibration level illustrated in FIG. 4 is desirable.

Thus, in order to reduce the aforementioned fluctuations that cause vibration of the compressor 110, the compressor control device 310 illustrated in FIG. 1 performs torque compensation for adding, to a basic torque to be output by the AC motor 111, a torque compensation value with a phase opposite to that of the fundamental wave component of the aforementioned fluctuations.

However, simply performing the torque compensation may possibly result in unstable operation of the AC motor 111. This point is described below.

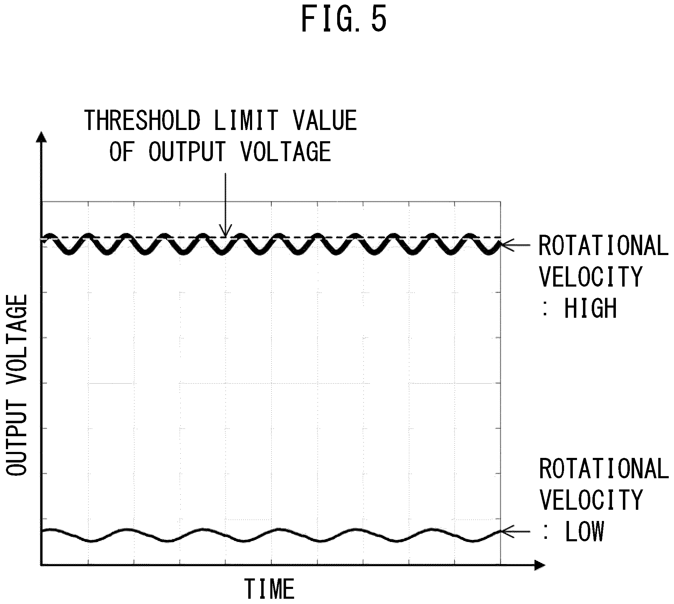

FIG. 5 illustrates waveforms of an output voltage output by the compressor inverter 210 to the AC motor 111 as a result of the aforementioned torque compensation. The vertical axis indicates the output voltage and the horizontal axis indicates time. The higher the rotational velocity of the AC motor 111, the higher the output voltage required for driving the AC motor 111.

Due to this, at a high rotational velocity of the AC motor 111, an instantaneous value of the output voltage may theoretically exceed a threshold limit value of the output voltage of the compressor inverter 210. In particular, in the case of performing the torque compensation, this torque compensation causes an increase in an amplitude of the output voltage, leading to an increase in a possibility that a situation occurs where the instantaneous value of the output voltage theoretically exceeds the threshold limit value. The instantaneous value of the output voltage theoretically exceeding the threshold limit value causes occurrence of unstable operation of the AC motor 111.

To solve the above-explained problems, the compressor control device 310 according to the present embodiment has configuration for suppressing occurrence of unstable operation of the AC motor 111. Hereinafter, the configuration of the compressor control device 310 is described in detail.

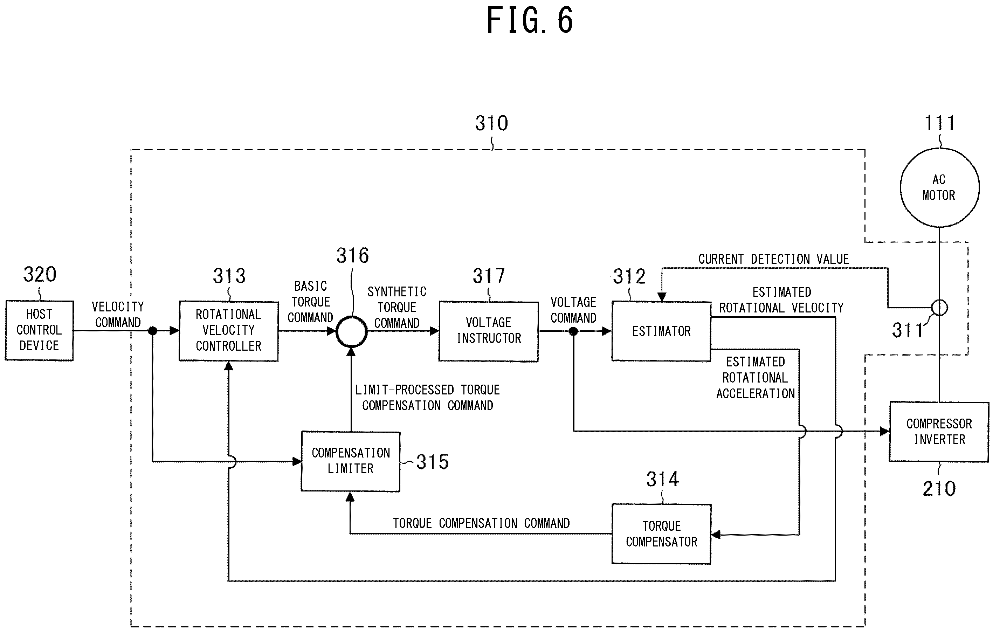

As illustrated in FIG. 6, the compressor control device 310 includes a current detector 311 that detects a current output by the compressor inverter 210 to the AC motor 111 and an estimator 312 to which a current detection value that is a result of the detection by the current detector 311 is input.

The current detection value includes a value of current flowing in a coil of U-phase of the AC motor 111, a value of current flowing in a coil of V-phase of the AC motor 111, and a value of current flowing in a coil of W-phase of the AC motor 111.

The estimator 312 calculates, using the current detection value, an estimated rotational velocity that is an estimate of the rotational velocity of the AC motor 111 and an estimated rotational acceleration that is an estimate of the rotational acceleration of the AC motor 111. The estimator 312 includes a proportional integral (PI) controller and an integrator that are series-connected.

Additionally, the compressor control device 310 includes a rotational velocity controller 313 to which the aforementioned estimated rotational velocity and a velocity command indicating a target rotational velocity of the AC motor 111 are input.

The velocity command is generated by a host control device 320 included in the control device 300 illustrated in FIG. 1. As another example, the compressor control device 310 may have the function of a velocity instructor that generates the velocity command. The velocity command is generated based on a temperature and other physical quantities in the passenger compartment that is the target of air-conditioning, user operation to switch the air-conditioning performance of the air conditioner 100, and the like.

The rotational velocity controller 313 calculates, using the estimated rotational velocity, the basic torque to be output by the AC motor 111 that is required for causing the rotational velocity of the AC motor 111 to approach the target rotational velocity indicated by the velocity command. The rotational velocity controller 313 outputs a basic torque command indicating this basic torque. The rotational velocity controller 313 includes a PI controller.

Additionally, the compressor control device 310 includes a torque compensator 314 to which the aforementioned estimated rotational acceleration is input. The torque compensator 314 calculates, using the estimated rotational acceleration, the torque compensation value that is a compensation value for the aforementioned basic torque that is required for suppressing the fluctuation of the rotational velocity of the AC motor 111. The torque compensator 314 outputs a torque compensation command indicating this torque compensation value.

Additionally, the compressor control device 310 includes a compensation limiter 315 to which the aforementioned torque compensation command is input. The compensation limiter 315 executes limitation processing for limiting the torque compensation value indicated by the torque compensation command. The compensation limiter 315 outputs a limit-processed torque compensation command indicating a limit-processed torque compensation value obtained by execution of the limitation processing on the torque compensation command.

Additionally, the compressor control device 310 includes an adder 316 that adds, to the basic torque indicated by the aforementioned basic torque command, the limit-processed torque compensation value indicated by the limit-processed torque compensation command.

The limit-processed torque compensation value is an AC signal and can alternate between positive and negative values. A value obtained by adding to the basic torque the limit-processed torque compensation value with a positive or negative sign is defined as the synthetic torque. The adder 316 outputs a synthetic torque command indicating the synthetic torque.

Additionally, the compressor control device 310 includes a voltage instructor 317 that outputs a voltage command indicating a voltage required for outputting the synthetic torque indicated by the aforementioned synthetic torque command. The voltage command is output to the compressor inverter 210 that supplies electric power to the AC motor 111. The compressor inverter 210 outputs, to the AC motor 111, a voltage in accordance with the voltage command.

Hereinafter, an operation of the compensation limiter 315 for preventing occurrence of unstable operation of the AC motor 111 is described.

The torque compensation value indicated by the torque compensation command is an AC value that changes over time. In the aforementioned limitation processing, the compensation limiter 315 limits an amplitude of the torque compensation value to be lower than or equal to a predetermined upper limit value while maintaining an average value of the torque compensation value.

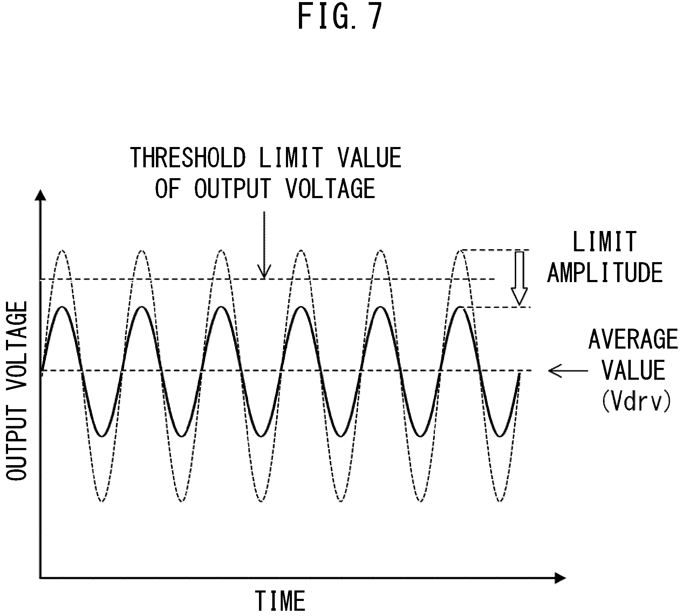

FIG. 7 illustrates a waveform of the output voltage of the compressor inverter 210 in the case where the amplitude of the torque compensation value is limited through the limitation processing. The AC waveform indicated by the broken line of FIG. 7 indicates the output voltage in the case where the limitation processing is not executed.

Due to the limitation of the amplitude of the torque compensation value to be lower than or equal to the upper limit value in the limitation processing, as illustrated in FIG. 7, the amplitude of the output voltage of the compressor inverter 210 is limited while the average value of the output voltage is maintained. This configuration enables avoiding occurrence of a situation where the instantaneous value of the output voltage theoretically exceeds the aforementioned threshold limit value, thereby preventing occurrence of unstable operation of the AC motor 111.

Here, as illustrated in FIG. 5, in the case where the rotational velocity of the AC motor 111 is low, the average value of the output voltage is small as compared to the case where the rotational velocity of the AC motor 111 is high. That is, the case where the rotational velocity of the AC motor 111 is low leads to a large deviation of the average value of the output voltage from the aforementioned threshold limit value as compared to the case where the rotational velocity of the AC motor 111 is high. Thus, in the case where the rotational velocity of the AC motor 111 is low, a small amount is sufficient as an amount by which the amplitude of the torque compensation value is limited through the limitation processing.

Therefore, the compensation limiter 315 employs, as the upper limit value of the amplitude of the torque compensation value, a value depending on the rotational velocity of the AC motor 111, more specifically, the target rotational velocity indicated by the velocity command illustrated in FIG. 6.

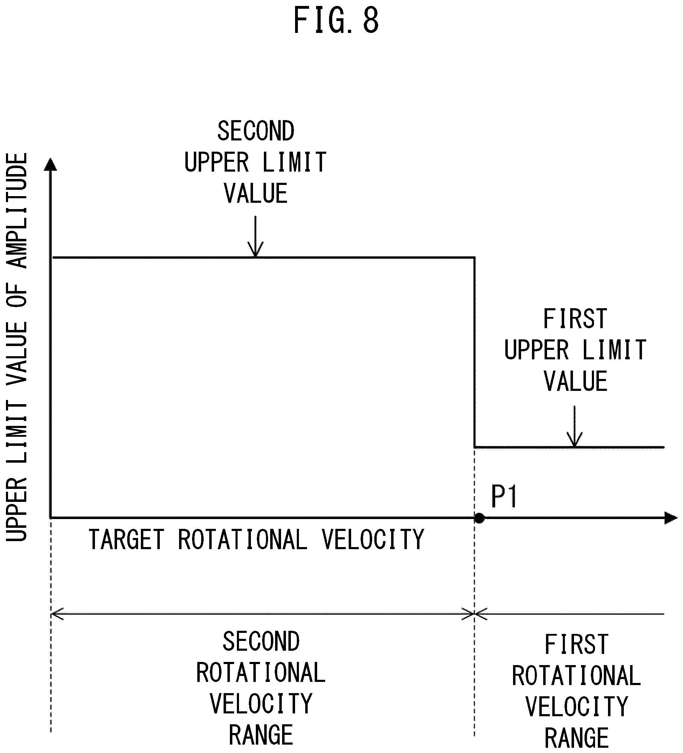

FIG. 8 illustrates details of the dependence of the upper limit value on the value of the target rotational velocity. The upper limit value for a value of the target rotational velocity within a first rotational velocity range, which is hereinafter referred to as the "first upper limit value", is defined to be smaller than the upper limit value for a value of the target rotational velocity within a second rotational velocity range indicating the rotational velocity lower than the first rotational velocity range, which is hereinafter referred to as the "second upper limit value".

In the case where the value of the target rotational velocity is within the second rotational velocity range, the average value of the output voltage has a large deviation from the aforementioned threshold limit value as compared to the case where the value of the target rotational velocity is within the first rotational velocity range. For this reason, a value larger than the first upper limit value is sufficient as the second upper limit value.

Conversely, in the case where the value of the target rotational velocity is within the first rotational velocity range, the average value of the output voltage of the compressor inverter 210 has a smaller deviation from the aforementioned threshold limit value as compared to the case where the value of the target rotational velocity is within the second rotational velocity range. Therefore, to impose a large limitation to the amplitude of the output voltage of the compressor inverter 210, the first upper limit value is defined to be smaller than the second upper limit value.

In the present embodiment, each of the first upper limit value and the second upper limit value is a constant that is independent of the target rotational velocity. The first rotational velocity range and the second rotational velocity range are contiguous on the horizontal axis illustrated in FIG. 8, that is, a rotational velocity axis indicating the rotational velocity.

An end point P1 of the first rotational velocity range that is closer to the second rotational velocity range indicates the rotational velocity when the output voltage of the compressor inverter 210 reaches a value between 60% and 90%, more specifically, 80%, of the aforementioned threshold limit value.

Hereinafter, a condition to be satisfied by the second upper limit value is first described in terms of the current supplied to the AC motor 111.

A torque T output by the AC motor 111 is expressed by Formula (1) below using a d-axis current Id that is the d-axis component of the current supplied to the AC motor 111, and a q-axis current Iq that is the q-axis component of the current supplied to the AC motor 111.

$$T = Pm \times \varphi f \times Iq - Pm \times (Lq - Ld) \times Id \times Iq \qquad (1)$$

In Formula (1), Pm is the number of pole pairs of the AC motor 111, $\varphi f$ is an induced voltage constant of the AC motor 111, Ld is the d-axis component of the inductance of the AC motor 111, and Lq is the q-axis component of the inductance of the AC motor 111.

The second term on the right side of Formula (1) represents a reluctance torque. If the reluctance torque is ignored as small, the torque T can be deemed as proportional to the q-axis current Iq. Therefore, explanation equivalent to explanation of limitation of the torque compensation value performed by the compensation limiter 315 can be provided by explanation of the limitation of current.

Thus, using the value of current I_lim corresponding to the aforementioned threshold limit value of the output voltage and the current I_drv required for outputting the aforementioned synthetic torque, I_mar expressed by Formula (2) below is defined. The second upper limit value is defined as a value satisfying the condition I_mar > 0.

$$I\_mar = \{(I\_lim)^2 - (I\_drv)^2\}^{0.5} \qquad (2)$$

Next, a condition to be satisfied by the first upper limit value is described in terms of the current and voltage supplied to the AC motor 111.

The output voltage of the compressor inverter 210 is expressed by Formula (3) below using a d-axis voltage Vd that is the d-axis component of the voltage supplied to the AC motor 111, and a q-axis voltage Vq that is the q-axis component of the voltage supplied to the AC motor 111.

$$\text{Output Voltage} = \{(Vd)^2 + (Vq)^2\}^{0.5} \qquad (3)$$

Additionally, using the voltage equation, the d-axis voltage Vd is expressed by Formula (4) below, and the q-axis voltage Vq is expressed by Formula (5) below.

$$Vd = R \times Id + s \times (Ld \times Id) - \omega \times Lq \times Iq \qquad (4)$$

$$Vq = R \times Iq + s \times (Lq \times Iq) + \omega \times (Ld \times Id + \varphi f) \qquad (5)$$

In Formulas (4) and (5), "R" is the winding resistance of the AC motor 111, "s" is the differential operator expressed in Laplace transform, and "$\omega$" is the angular frequency of the fundamental wave component of the load torque illustrated in FIG. 3 or an integer multiple thereof.

For simplicity, the d-axis current Id is taken to be sufficiently small. Additionally, to focus on the steady state, the second term on the right-hand side in Formulas (4) and (5) including the differential operator "s" is ignored. Using Formulas (3), (4), and (5), the output voltage is expressed by Formula (6) below.

$$\text{Output Voltage} = \{(\omega \times Lq \times Iq)^2 + (R \times Iq + \omega \times \varphi f)^2\}^{0.5} \qquad (6)$$

The fundamental wave component of the load torque illustrated in FIG. 3 is expressed by Formula (7) below.

$$\text{Fundamental Wave Component} = |TL\_ac|\cos(\omega t) + TL\_dc \qquad (7)$$

The first term on the right side of Formula (7) is canceled or reduced by the compensation of the fluctuation performed by cooperation of the torque compensator 314, the compensation limiter 315, and the adder 316. The output of the torque of the DC component corresponding to the second term on the right side of Formula (7) is achieved through the basic torque command.

The q-axis current Iq required for the AC motor 111 to output the torque expressed in Formula (7) is expressed by Formula (8) below using Formula (1). For simplicity, the d-axis current Id is assumed to be sufficiently small.

$$Iq = |TL\_ac|/Pm/\varphi f \times \cos(\omega t) + TL\_dc/Pm/\varphi f \qquad (8)$$

In the limitation processing executed by the compensation limiter 315, due to the limitation of the amplitude of the torque compensation value, the amplitude of the first term on the right side of Formula (8) is limited while the average value expressed by the second term on the right side of Formula (8) is maintained.

A value of the voltage corresponding to the second term on the right side of equation (8) is taken to be Vdrv. Vdrv is expressed, by substituting the second term on the right side of Formula (8) into Formula (6), by Formula (9) below.

$$Vdrv = \{(\omega \times Lq \times TL\_dc/Pm/\varphi f)^2 + (R \times TL\_dc/Pm/\varphi f + \omega \times \varphi f)^2\}^{0.5} \qquad (9)$$

The first upper limit value is defined as a value satisfying the condition that a value of an amplitude of a voltage corresponding to an amplitude of the first term on the right side of Formula (8) is within the range of a difference between the threshold limit value of the output voltage of the compressor inverter 210 and the Vdrv expressed by Formula (9).

Next, an acceleration level of rotation of the AC motor 111 is described.

An amplitude of the fundamental wave component of the load torque illustrated in FIG. 3 is taken to be |TL_ac|, and an amplitude of the synthetic torque indicated by the synthetic torque command illustrated in FIG. 6 is taken to be |Tm_ac|. The acceleration level of rotation of the AC motor 111 is expressed by Formula (10) below. Jm represents the moment of inertia of the rotor of the AC motor 111.

$$\text{Acceleration Level} = 1/Jm \times (|Tm\_ac|\cos(\omega t) - |TL\_ac|\cos(\omega t) \qquad (10)$$

In the case where the amplitude of the torque compensation value is limited through the aforementioned limitation processing, the amplitude of the synthetic torque "|Tm_ac|" does not match the amplitude of the fundamental wave component of the load torque "|TL_ac|". Due to this, the acceleration level expressed in Formula (10) is not zero.

However, since the torque compensation value with the amplitude limited through the limitation processing is added to the basic torque, the amplitude of the synthetic torque "|Tm_ac|" approaches the amplitude of the fundamental wave component of the load torque "|TL_ac|". As a result, the acceleration level expressed in Formula (10) is suppressed. This enables suppression of the fluctuation of the rotational velocity of the AC motor 111, resulting in suppression of generation of vibration and noise of the compressor 110.

Note that the original amplitude of the torque compensation value may be less than the first upper limit value or the second upper limit value. In this case, since the amplitude of the torque compensation value is not limited through the aforementioned limitation processing, the amplitude of the synthetic torque "|Tm_ac|" can match the amplitude of the fundamental wave component of the load torque "|TL_ac|".

The concept of the "limit-processed torque compensation value" indicated by the limit-processed torque compensation command illustrated in FIG. 6 encompasses not only the torque compensation value with the amplitude reduced in the limitation processing but also the torque compensation value with an amplitude that is not reduced in the limitation processing due to an original amplitude that is less than the first upper limit value or the second upper limit value.

As described above, according to the present embodiment, since the limit-processed torque compensation value is added to the basic torque indicated by the basic torque command, the fluctuation of the rotational velocity of the AC motor 111 can be suppressed.

Additionally, as illustrated in FIG. 8, the first upper limit value that is the upper limit value for the amplitude of the torque compensation value for cases where the target rotational velocity is high is defined to be smaller than the second upper limit value that is the upper limit value for cases where the target rotational velocity is small. This configuration decreases the possibility that a situation occurs where the output voltage theoretically exceeds the threshold limit value in response to the rotational velocity of the AC motor 111 being high. Thus, suppression of occurrence of unstable operation of the AC motor 111 when the rotational velocity is high can be achieved.

Embodiment 2

FIG. 8 illustrates an example of configuration in which the upper limit value changes in a stepwise manner in accordance with the increase in the target rotational velocity. The dependence of the upper limit value on the target rotational velocity is not limited to the example illustrated in FIG. 8. Hereinafter, another example of the dependence of the upper limit value on the target rotational velocity is described.

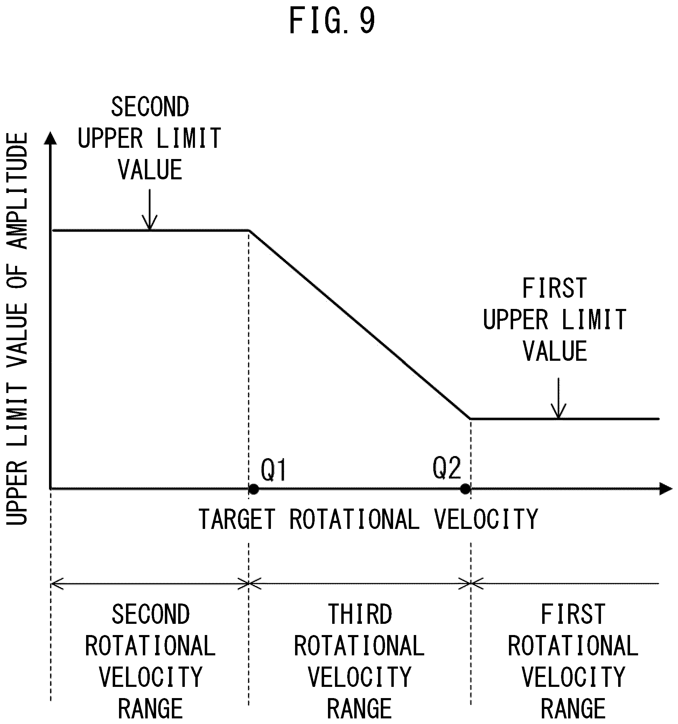

As illustrated in FIG. 9, in the present embodiment, a third rotational velocity range intervenes between the first rotational velocity range for which the first upper limit value is defined and the second rotational velocity range for which the second upper limit value is defined.

In the third rotational velocity range, the upper limit value is taken to be a variable value having a linear variation characteristic of approaching the first upper limit value from the second upper limit value with approach from an end point Q1 of the third rotational velocity range that is closer to the second rotational velocity range toward another end point Q2 of the third rotational velocity range that is closer to the first rotational velocity range.

According to the present embodiment, a large change in the output torque of the AC motor 111 is less likely to occur upon shifting of the target rotational velocity of the AC motor 111 from one of the first range and the second rotational velocity range to the other range. This contributes to stabilization of the operation of the AC motor 111 and long working time of the AC motor 111.

Embodiments 1 and 2 are described above. Although FIG. 1 illustrates the compressor control device 310 as an example of the AC motor control device according to the present disclosure, the target of control of the AC motor control device according to the present disclosure is not limited to the AC motor 111 of the compressor 110.

The target of control of the AC motor control device according to the present disclosure may be an AC motor included in the outdoor fan 131 or may be an AC motor included in the indoor fan 132. Furthermore, the target of control of the AC motor control device according to the present disclosure may be an AC motor included in a device other than the air conditioner 100.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

Reference Signs List

| | |
|---|---|
| 100 | Air conditioner |
| 110 | Compressor |
| 111 | AC motor |
| 112 | Drive shaft |
| 113 | Compression mechanism |
| 114 | Housing |
| 120 | Cooperating devices group |
| 121 | Outdoor heat exchanger |
| 122 | Expander |
| 123 | Indoor heat exchanger |
| 131 | Outdoor fan |
| 132 | Indoor fan |
| 200 | Power conversion device |
| 210 | Compressor inverter (inverter) |
| 300 | Control device |
| 310 | Compressor control device (AC motor control device) |
| 311 | Current detector |
| 312 | Estimator |
| 313 | Rotational velocity controller |
| 314 | Torque compensator |
| 315 | Compensation limiter |

316    Adder
317    Voltage instructor
320    Host control device
400    Railroad vehicle air conditioning apparatus (air conditioning device)

**Claims**

1.  An AC motor control device, comprising:

    an estimator to calculate an estimated rotational velocity that is an estimate of a rotational velocity of an AC motor and an estimated rotational acceleration that is an estimate of a rotational acceleration of the AC motor;
    a rotational velocity controller to calculate, using the estimated rotational velocity, a basic torque to be output by the AC motor that is required for causing the rotational velocity of the AC motor to approach the target rotational velocity indicated by a velocity command, and output a basic torque command indicating the calculated basic torque;
    a torque compensator to calculate, using the estimated rotational acceleration, a torque compensation value that is a compensation value for the basic torque that is required for suppressing a fluctuation of the rotational velocity of the AC motor, and output a torque compensation command indicating the calculated torque compensation value;
    a compensation limiter to execute limitation processing for limiting the torque compensation value indicated by the torque compensation command, and output a limit-processed torque compensation command indicating a limit-processed torque compensation value obtained by the execution of the limitation processing on the torque compensation command;
    an adder to add, to the basic torque indicated by the basic torque command, the limit-processed torque compensation value indicated by the limit-processed torque compensation command, and output a synthetic torque command indicating a synthetic torque obtained by the addition; and
    a voltage instructor to output, to an inverter to supply electric power to the AC motor, a voltage command indicating a voltage required for outputting the synthetic torque indicated by the synthetic torque command, wherein
    in the limitation processing, the compensation limiter limits an amplitude of the torque compensation value that changes over time to be lower than or equal to a predetermined upper limit value,
    the upper limit value depends on a value of the target rotational velocity, and
    a first upper limit value that is the upper limit value for a value of the target rotational velocity within a first rotational velocity range is defined to be smaller than a second upper limit value that is the upper limit value for a value of the target rotational velocity within a second rotational velocity range indicating the rotational velocity lower than the first rotational velocity range.

2.  The AC motor control device according to claim 1, wherein

    each of the first upper limit value and the second upper limit value is a constant,
    a third rotational velocity range intervenes between the first rotational velocity range and the second rotational velocity range, and
    in the third rotational velocity range, the upper limit value is taken to be a variable value having a linear variation characteristic of approaching the first upper limit value from the second upper limit value with approach from an end point of the third rotational velocity range that is closer to the second rotational velocity range toward another end point of the third rotational velocity range that is closer to the first rotational velocity range.

3.  The AC motor control device according to claim 1, wherein

    each of the first upper limit value and the second upper limit value is a constant, and
    the first rotational velocity range and the second rotational velocity range are contiguous.

4.  The AC motor control device according to any one of claims 1 to 3, wherein an end point of the first rotational velocity range that is closer to the second rotational velocity range indicates the rotational velocity when an output voltage that is output by the inverter to the AC motor reaches a value between 60% and 90% of a threshold limit value of an output voltage outputtable by the inverter.

5.  The AC motor control device according to any one of claims 1 to 4, wherein, due to the limitation of the amplitude of the torque compensation value to be lower than or equal to the upper limit value in the limitation processing, an amplitude of an output voltage that is output by the inverter to the AC motor is limited while an average value of the output voltage is maintained.

6. An air conditioning device, comprising:

the AC motor control device according to any one of claims 1 to 5;
a compressor including the AC motor and to compress refrigerant through circulation of the AC motor; and
a cooperating devices group included in, together with the compressor, a refrigeration cycle for circulation therethrough of the refrigerant.

7. The air conditioning device according to claim 6, wherein the air conditioning device is mountable on a railroad vehicle and is configured to perform air-conditioning of a passenger compartment of the railroad vehicle using the refrigeration cycle.

# FIG. 1

400

100

122
(120)

EXPANDER

121
(120)

131

132

123
(120)

OUTDOOR HEAT EXCHANGER

OUTDOOR FAN

INDOOR FAN

INDOOR HEAT EXCHANGER

110

COMPRESSOR

111

AC MOTOR

POWER CONVERSION DEVICE — 200

COMPRESSOR INVERTER — 210

CONTROL DEVICE — 300

COMPRESSOR CONTROL DEVICE — 310

# FIG. 2

# FIG. 3

# FIG. 4

# FIG. 5

THRESHOLD LIMIT VALUE
OF OUTPUT VOLTAGE

ROTATIONAL
VELOCITY
: HIGH

ROTATIONAL
VELOCITY
: LOW

OUTPUT VOLTAGE

TIME

# FIG. 6

EP 4 576 560 A1

# FIG. 7

# FIG. 8

# FIG. 9

UPPER LIMIT VALUE OF AMPLITUDE

SECOND
UPPER LIMIT
VALUE

FIRST
UPPER LIMIT
VALUE

Q1                    Q2

TARGET ROTATIONAL VELOCITY

SECOND
ROTATIONAL
VELOCITY
RANGE

THIRD
ROTATIONAL
VELOCITY
RANGE

FIRST
ROTATIONAL
VELOCITY
RANGE

## INTERNATIONAL SEARCH REPORT

| International application No. |
|---|
| **PCT/JP2022/031327** |

**A. CLASSIFICATION OF SUBJECT MATTER**

*H02P 21/22*(2016.01)i; *H02P 27/06*(2006.01)i
FI: H02P21/22; H02P27/06

According to International Patent Classification (IPC) or to both national classification and IPC

**B. FIELDS SEARCHED**

Minimum documentation searched (classification system followed by classification symbols)

H02P21/22; H02P27/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2013/108374 A1 (MITSUBISHI ELECTRIC CORP.) 25 July 2013 (2013-07-25) paragraphs [0001]-[0078], fig. 1-24 | 1-7 |
| A | WO 2021/059350 A1 (MITSUBISHI ELECTRIC CORP.) 01 April 2021 (2021-04-01) paragraphs [0001]-[0105], fig. 1-19 | 1-7 |
| A | JP 2021-136811 A (HITACHI POWER SEMICONDUCTOR DEVICE, LTD.) 13 September 2021 (2021-09-13) paragraphs [0001]-[0135], fig. 1-15 | 1-7 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 September 2022** | **04 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/031327**

| Patent document cited in search report | | | Publication date (day/month/year) | Patent family member(s) | | | Publication date (day/month/year) |
|---|---|---|---|---|---|---|---|
| WO | 2013/108374 | A1 | 25 July 2013 | US paragraphs [0001]-[0136], fig. 1-24 CN | 2014/0247003 103931098 | A1 A | |
| WO | 2021/059350 | A1 | 01 April 2021 | (Family: none) | | | |
| JP | 2021-136811 | A | 13 September 2021 | WO | 2021/171679 | A1 | |

Form PCT/ISA/210 (patent family annex) (January 2015)

**EP 4 576 560 A1**

**Patent documents cited in the description**

- JP 2006180605 A